# EUROPEAN PATENT APPLICATION

(11) **EP 1 798 014 A2**
(43) Date of publication of application: **20.06.2007**
(21) Application number: 06026182.3
(22) Date of filing: 18.12.2006
(51) Int. Cl.: B28B 3/20, B28B 11/16

(54) **Cutting device for an extruder**

(30) Priority: 19.12.2005 IT BO20050771
(71) Applicant: Gruppo Barbieri & Tarozzi S.p.A., 41043 Formigine MO (IT)
(72) Inventor: Tarozzi, Fausto, 41043 Forigine (MO) (IT)
(74) Representative: Feltrinelli, Secondo Andrea

(57) **Abstract**

The cutting device suitable for cutting strips of extruded material (M) lengthwise and obtain two facing portions (M1, M2) of said strip, comprises blade means (7) that can be mounted crosswise by an extrusion opening (6) of an extrusion apparatus (1), said blade means (7) further comprising replaceable cutting edge means (16; 30) and deflector means (19; 26) to deflect said facing portions (M1, M2) of said strip from said blade means (7).

## Description

The invention refers to a cutting device, suitable for cutting strips of extruded material lengthwise to obtain two facing portions of said strip.

According to a forming technique in the production of ceramic products, for example tiles, ceramic mixes are prepared at the plastic state and then undergo a process that eliminates any air they contain and then they are put inside extrusion devices that extrude the mixes in the shape of a substantially continuous strip.

The thickness of this strip substantially coincides with the definitive thickness of the products to be made and is subsequently cut crosswise and lengthwise to make the tiles of the size wanted, which, once cut, are sent to the kilns.

With this forming technique, extrusion makes it possible to render visible some of the streaks of the materials used to make up the ceramic mixes: this means that the exterior aspect and the inside of the tiles made by extrusion show signs of the streaks that go right through their thickness which is the reason why there is a great demand for them on the market.

To show up this part of the streak, that goes through to the surface of the tile that is to become the top visible side, the corresponding upper surface of the strip of the mix on which layers of oxides also form rendering it opaque, is scraped crosswise by a blade installed immediately downstream from the extrusion opening of an extrusion device; scraping removes a layer of material varying in thickness from the surface of the strip which also includes layers of oxides and which, once removed, shows a new surface which is completely clean and where most of the streak can be seen easily.

Scraping depth can vary and, since the ceramic materials used to make the mix tend to form layers, deeper scraping brings to light a greater number of streaks.

According to another known technique, the strip of ceramic mixes is cut halfway lengthwise with a blade crosswise in relation to extrusion direction and which lies on a plane parallel with the top and under faces of the strip.

with this technique it is possible to double production, first making two strips one on top of the other, and then, after the crosswise cuts have been made perpendicular to these strips, pairs of tiles one on top of the other which have their top faces matching, and it is also possible to restore the streaks contained in the extruded ceramic mixes on both top faces.

This state of the art does have some drawbacks.

One of the drawbacks of this technique that entails simple scraping of the tile surface, is that production is remarkably slow and the material which is scraped away, to be then recovered and used again in the production cycle, must be taken by hand by workers given to this task.

Another drawback, concerning the technique of cutting done while the material is being extruded, is that the blades used for cutting damage quickly due to the strong friction generated between the cutting edge and the strip mass of the ceramic material mixes to be cut.

For this reason the whole blades have to be replaced cyclically and regularly which is costly and time consuming. Yet another drawback is that the friction created also between the surfaces of the blades and the faces of the portions of strip that have been cut and which rub against them, can generate stress in the mass of extruded material, particularly in the area of contact which, in the next phase where the products are baked in the kiln, leads to flatness defects.

An object of this invention is to improve the state of the art.

Another object of the invention is to make a cutting device that is suitable for cutting facing strip portions of extruded material in two and which has a life notably longer than known cutting devices and allows for easy maintenance work.

Another object of the invention is to make a cutting device that is suitable for cutting facing strip portions of extruded material in two that reduces friction considerably between the faces of the two facing portions and the surfaces over which the cutting devices slide.

According to one aspect of the invention, a cutting device is provided that is suitable for cutting strips of extruded material lengthwise and thus obtain two facing portions of said strip and comprising blade means that can be mounted crosswise to the extrusion opening of an extrusion apparatus, characterised in that said blade means comprise replaceable cutting edge means.

According to another aspect of the invention, a cutting device is provided suitable for cutting strips of extruded material lengthwise and thus obtain two facing portions of said strip and comprising blade means that can be mounted crosswise to the extrusion opening of an extrusion apparatus, characterised in that said blade means comprise deflector means arranged to deflect said two facing portions from said blade means.

According to another aspect of the invention, a cutting device is provided suitable for cutting strips of extruded material lengthwise and thus obtain two facing portions of said strip and comprising blade means that can be mounted crosswise to the extrusion opening of an extrusion apparatus, characterised in that said blade means comprise replaceable cutting edge means and fitted with deflector means arranged to deflect said two facing portions of said strip from said blade means.

The cutting device thus allows to cut strips of ceramic material mixes into two facing portions, achieving a longer life than the known cutting devices and, simultaneously, notably reducing friction between the portions created by the cut and the surfaces of contact with the cutting device.

Further characteristics and advantages of the invention will become more evident from the detailed description of an embodiment of a cutting device, illustrated by way of example but not limited to, on the attached drawing tables wherein:
Figure 1 is a side interrupted and partially section view of an end part of an extrusion apparatus;
Figure 2 is a view from the top of the end part of the extrusion apparatus of Figure 1;
Figure 3 is an interrupted view, on an enlarged scale, of a longitudinal section of the cutting means, in a first embodiment and during extrusion;

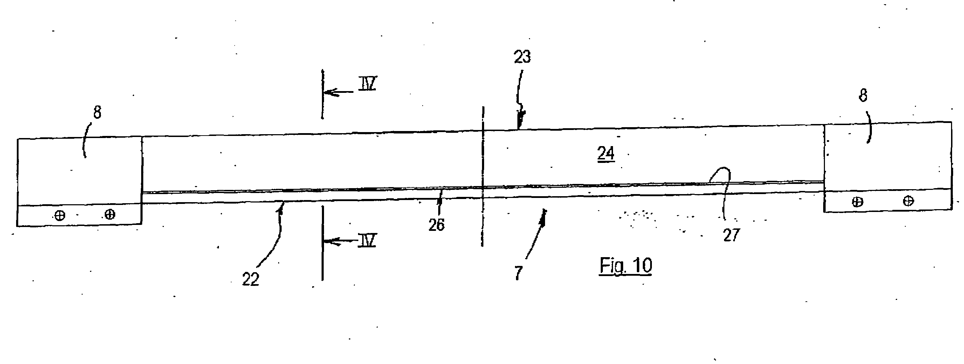

Figure 4 is a section view of the cutting means taken according to the trend plan IV-IV in Figure 10;
Figure 5 is an interrupted view in perspective of the cutting means in a second embodiment;
Figure 6 is a longitudinal section view of a drawplate of an extrusion apparatus and its extrusion opening;
Figure 7 is an interrupted side view, on an enlarged scale, of the cutting means of Figure 5;
Figure 8 is a front view of the end part of the extrusion apparatus of Figure 1;
Figure 9 is a cross-section view of the end part of Figure 8 taken according to the trend plan IX-IX of Figure 8;
Figure 10 is a view from the top of the cutting means of Figure 4;
Figure 11 is a section view of the cutting means of Figure 4, in a slightly modified version.

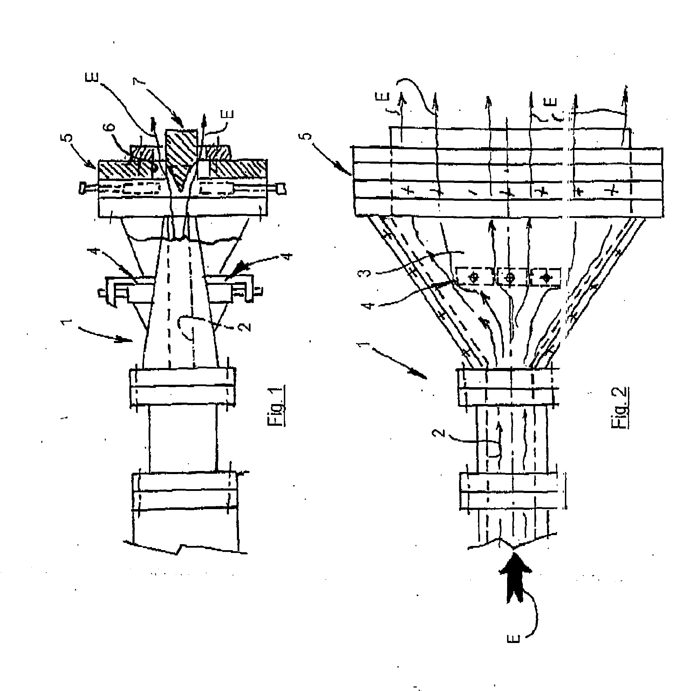

With reference to Figures 1 and 2, an end part of an extrusion apparatus, suitable for extruding materials at the plastic state like, for example, ceramic material mixes "M" used to make tiles has been designated by reference number 1.

End part 1 is longitudinally crossed over by an extrusion channel 2 which flows into a widened portion 3 where deviator means 4 are housed crosswise, extending out wards, as can be seen in Figure 1, so they can be manoeuvred as required and used to deviate the flows of the ceramic material mixes "M" to be extruded.

At one terminal end of the widened portion 3 a traditional drawplate 5 is mounted featuring an extrusion opening 6, in the shape of a slit, through which the mass of the ceramic materials "M" passes which is modelled in the shape of a strip while it is being extruded.

According to the invention, blade means 7 are mounted by the extrusion opening 6, arranged in the same way as the extrusion opening 6 so as to divide it into two identical and separate parts and which cut the masses of ceramic materials "M" as they are being extruded, following a surface parallel with the bigger faces of the strip.

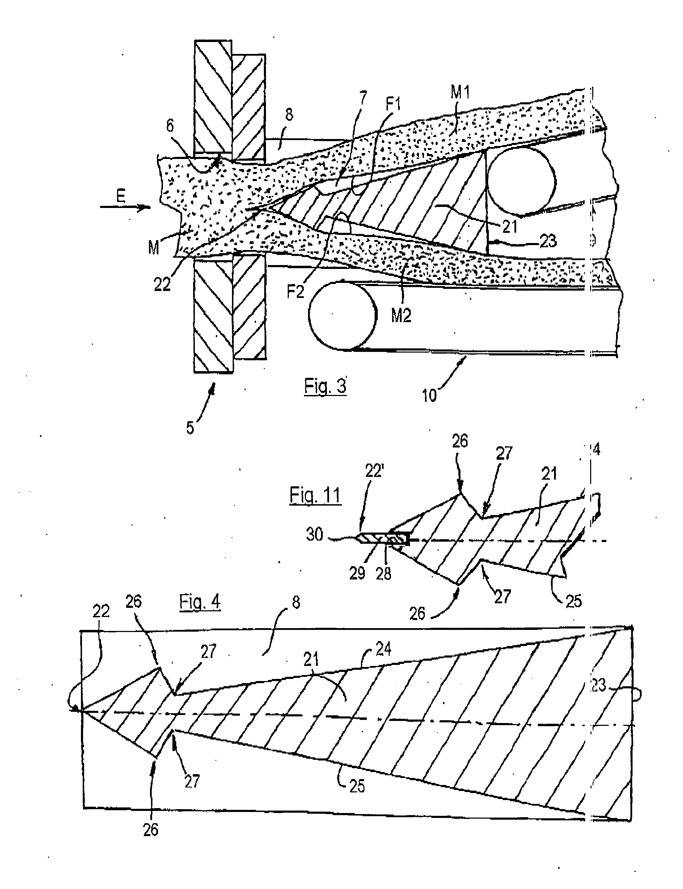

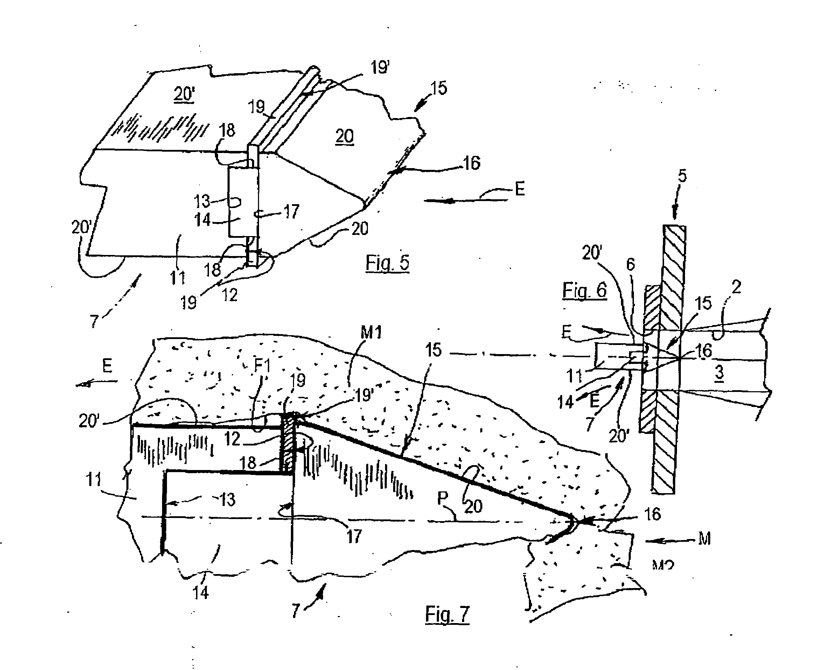

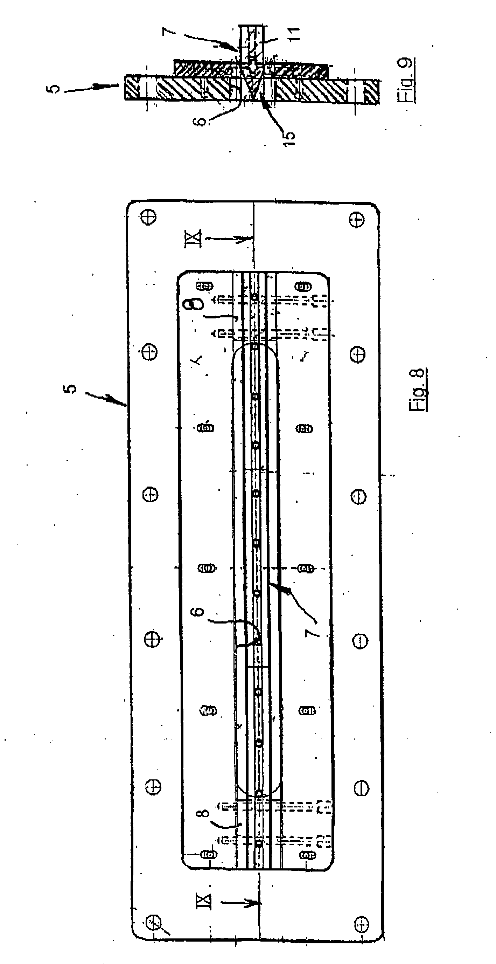

The blade means 7 are arranged crosswise, as can be seen in Figures 3 and 6, and are fastened to the drawplate 5 by flanges 8 that are secured bilaterally to the extrusion opening 6, as can be seen in Figure 8.

With reference to Figure 3 and partially also to Figure 7, it can be seen that the mass of extruded ceramic material "M" is divided into two facing portions "M1" and "M2", each one taken away by conveyors 9 and 10.

According to a first embodiment, illustrated in Figures 3, 4 and 11, the blade means comprise a body 21, normally made in one whole piece, that has a substantially triangular cross-section and which defines a point 22 designed to penetrate the strips of extruded ceramic material "M" crosswise and which can be positioned in front of the extrusion opening 6, but external to it, as can be seen in Figure 3.

Figure 11 shows a modified version of point 22, indicated with 22'; this modified version has an additional longitudinal groove 28 obtained in the point 22', inside of which a continuous lip 29 is inserted that has a cutting edge 30 which faces the extrusion opening 6.

The body 21 forms a rear base 23 opposite point 22 and two sliding surfaces 24 and 25 converging towards point 22; these sliding surfaces 24 and 25 connect point 22 and two ends of the rear base 23 together and their purpose is to let the facing portions "M1" and "M2" slide along while the ceramic material "M" is being extruded.

In this first version of blade means, deflector means are provided, to deflect the facing portions "M1" and "M2" during extrusion from the sliding surfaces 24 and 25 for a certain stretch so as to notably reduce the friction that is created between them.

In detail, the deflector means comprise a pair of edged borders 26 each one raised from their sliding surfaces 24 and 25; the edged borders 26 are arranged parallel with one another and perpendicular to the extrusion direction "E".

Downstream from the edged borders 26 respective concave profiles 27 are provided which' are connected to them and to the sliding surfaces 24 and 25, and are arranged to reduce contact between them and the facing portions "M1" and "M2" during extrusion.

In a second version, illustrated in Figures 5, 6, 7 and 9, the blade means 7 comprise a first prismatic body 11 that extends crosswise for the whole width of the extrusion opening 6 and which features a face 12 facing it, perpendicular to the extrusion direction indicated with the arrows "E".

The face 12 features lengthwise a groove 13 inside which a lip 14 can be placed in a removable way that extends from a second body 15 that forms a cutting front and which is part of the blade means 7, as better specified further on.

The second body 15 has a cross-section in the shape of an isosceles triangle, as can be seen in Figure 5, and at its vertex it defines a cutting edge 16 facing the extrusion opening 6 until it reaches the inside of it, and an opposite rear base 17 facing face 12.

The lip 14 projects off from this rear base 17 and can be engaged into groove 13: for this reason the latter has a rectangular and concave cross-section while the lip 14 has a cross-section correspondingly rectangular but convex and its size across is exactly right to fit inside groove 13, while the length of the lip 14 keeps the second body 15 slightly away from face 12; in this way between these are defined two opposite grooves 18 facing out and symmetrical in relation to a central longitudinal plane of symmetry "P" both of the first body 11 and second body 15 and of the extrusion opening 6.

Corresponding continuous laminar elements 19 can be fitted in these grooves 18 and they are slightly higher then the depth of the grooves 18, so they project slightly after being fitted in the grooves, as can be seen in Figures 5 and 7, forming a raised step 19'.

Both the grooves 18 and laminar elements 19 are part of the deflector means provided to slightly deflect the directions of the two facing portions "M1" and "M2" of the ceramic material while it is being extruded.

The second body 15 also forms two identical surfaces 20 that meet at the cutting edge 16 which, when the cutting device 1 is mounted inside the extrusion opening 6, become the respective sliding surfaces for the two facing portions "M1" and "M2"; the two surfaces 20 connect the cutting edge 16 and the two opposite ends of the rear base 17 together

The cutting device works as follows: in the second embodiment, the device is fixed to the drawplate 5 of an extrusion apparatus by means of the flanges 8, so the second body 15 is inside the extrusion opening 6.

Therefore, between the latter and the sliding surfaces 20 are defined two passages in the shape of slits on top of each other and through which the facing portions "M" and "M2" of the ceramic material mixes "M" pass, created by the longitudinal cut.

Each facing portion slides along its corresponding surface 20 until it reaches the corresponding step 19' created by the respective laminar element 19 inserted in the respective groove 18 and which protrudes from the surface 20.

The steps 19' force the facing portions "M1" and "M2" to partially detach from the sliding surfaces 20 and also from the surfaces of the first prismatic body 11, as indicated in figure 7.

This detachment reduces friction considerably between the reciprocal sliding contact surfaces, that is, between faces "F1" and "F2" of the facing portions "M1" and "M2" and those of the sliding surfaces 20 and 20' of the prismatic body 11, thus avoiding faces "F1" and "F2" from being damaged after the cut.

When the cutting edge 16 of the second body 15 is worn due to the strong friction that occurs while the ceramic material mixes "M" are being extruded and cut, irregularities occur on faces "F1" and "F2", mostly scorings, and stress increases in the ceramic material mass "M".

It is therefore necessary to restore the cutting edge 16 and to do this the blade means 7 must be removed, the second body 15 separated from the first prismatic body 11, the lip 14 taken out of the groove 13 and only the second body 15 replaced with another that has a new cutting edge 16.

Now, proceeding in the reverse order of demounting, the blade means 7 are mounted again so they can continue cutting the ceramic material mixes "M" correctly as they are being extruded, notably reducing the onset of stress and without damaging the faces "F1" and "F2" which are to become the top faces of the tiles to be formed.

In the first embodiment of the blade means 7, these are fixed to the drawplate 5 of an extrusion apparatus by means of flanges 8 so the triangular body 21 is in front of the extrusion opening 6 but with point 22, or 22', in an area external to it.

The ceramic material mixes "M" are cut crosswise by point 22 of the triangular section body 21 which penetrates them during extrusion, as can be seen in Figure 3, and the facing portions "M1" and "M2" which are created slip along the sliding surfaces 24 and 25 up to the edged borders 26 which move them away from the latter for a certain stretch, reducing friction between faces "F1" and "F2" and the sliding surfaces 24 and 25.

This reduction in friction prevents faces "F1" and "F2" of the facing portions "M1" and "M2" from creating stress in the facing portions "M1" and "M2" as they are slipping along the sliding surfaces 24 and 25.

Likewise, for the version illustrated in Figure 11, lip 29 sees to cutting the extruded ceramic material mixes "M" crosswise.

When points 22 and 22' are worn out by friction and have to be replaced, the whole body 21 is replaced, in the version illustrated in Figure 4, while in the version illustrated in Figure 11 only the continuous lip 29 is replaced.

## Claims

1. Cutting device suitable for cutting strips of extruded material (M) lengthwise and obtain two facing portions (M1, M2) of said strip, comprising blade means (7) that can be mounted crosswise to an extrusion opening (6) of an extrusion apparatus (1), **characterised in that** said blade means (7) comprise replaceable cutting edge means (16; 30).

2. Cutting device suitable for cutting strips of extruded material (M) lengthwise and obtain two facing portions (M1, M2) of said strip, comprising blade means (7) that can be mounted crosswise to an extrusion opening (6) of an extrusion apparatus (1), **characterised in that** said blade means (7) comprise deflector means (19; 26) arranged to deflect said two facing portions (M1, M2) from said blade means(7).

3. Cutting device suitable for cutting strips of extruded material (M) lengthwise and obtain two facing portions (M1, M2) of said strip, comprising blade means (7) that can be mounted crosswise to an extrusion opening (6) of an extrusion apparatus (1), **characterised in that** said blade means (7) comprise replaceable cutting edge means (16; 30) and deflector means (19; 26) to deflect said facing portions (M1, M2) of said strip from said blade means (7).

4. Device according to claim 1 or 3 wherein said replaceable cutting edge means comprise: a first flattened body (11) which can be fastened crosswise in front of said extrusion opening (6) and having a face (12) perpendicular to an extrusion direction (E) facing said extrusion opening(6).

5. Device according to claim 1 or 3 wherein said replaceable cutting edge means further comprise a second body (15) having a cross-section in the shape of an isosceles triangle which defines a cutting edge (16) coinciding with said cutting edge and facing said extrusion opening (6), and an opposite rear base (17) facing said face (12), fitted with restraining means (14) which can be engaged in said coupling means (13).

6. Device according to claim 5 wherein said second body (15) comprises two equal sides for connecting said vertex and said rear base and defining respective sliding surfaces (20).

7. Device according to any of the claims from 4 to 6 wherein between said first flattened body (15) and said second body (15) are positioned first coupling means (13) obtained on said face (12).

8. Device according to claim 7 wherein said coupling means comprise a longitudinal groove (13) which features a crosswise polygonal section.

9. Device according to claim 5 or 8 wherein said restraining bodies comprise a lip (19) which protrudes from said rear base (17) facing said longitudinal groove (13) and having crosswise polygonal section arranged for coupling in a removable way in said groove (13).

10. Device according to any of the claims 5 or 6 wherein said second body (15), in a cutting configuration of said cutting edge means (16; 30), is centred inside said extrusion opening (6), dividing it in two adjacent symmetrical portions.

11. Device according to any of the claims from 2 to 6 wherein said deflector means comprises two symmetrically opposite grooves (18), defined between said rear (17) and said face (12) and having substantially the same depth; two laminar elements (19) having the same height and slightly higher than said substantially equal depths, and which can be fitted in a removable way each in a respective groove (18), so as to create bilaterally corresponding steps (19') protruding from said sliding surfaces (20)

12. Device according to claim 11 wherein said laminar elements (19) are continuous.

13. Device according to claim 2 wherein said blade means comprise: a body (21) which has a substantially triangular section, which defines a point (22, 22') that can be inserted in said strips of extruded material (M) crosswise and that can be positioned in front of said extrusion opening (6); a rear base (23), opposite said point (22; 22'); two sliding surfaces (24, 25) converging towards said point (22; 22'), connecting the latter with two ends of said rear base (23).

14. Device according to claim 2 or 13 wherein said deflector means comprise: a pair of edged borders (26) each one protrudes from a corresponding sliding surface of said sliding surfaces (24, 25) and arranged crosswise perpendicular to an extrusion direction (E).

15. Device according to claim 14 wherein downstream from said edged borders (26) and connected to these and to said sliding surfaces (24, 25), are defined respective concave profiles (27) arranged to reduce contact between said facing portions (M1, M2) of said strip and said sliding surfaces (24, 25).

16. Device according to claim 13, wherein said point (22') comprises: a groove (28) obtained in said point (22'); a sharp lip (29), which can be inserted in said groove (28) in a removable way and with a protruding section facing said extrusion opening (6).

17. Device according to any of the claims 2 or 13 wherein said body (21) with a substantially triangular section in a cutting configuration of said blade means (7) is centred in front of said extrusion opening (6) and outside this, so as to define two adjacent extrusion channels.

18. Device according to any of the preceding claims, **characterized in that** said blade means (7) feature a central plane (P) of symmetry coinciding with a plane of symmetry of said extrusion opening (6).

19. Device according to any of the preceding claims, wherein said first flattened body (11), second body (15), two opposite grooves (18), two laminar elements (19), sliding surfaces (20, 24, 25), edged borders (26) are arranged symmetrically with respect to said central plane (P) of symmetry.

20. Extrusion apparatus **characterized in that** it is equipped with a cutting device according to claims from 1 to 19.
